# EUROPÄISCHE PATENTSCHRIFT

(11) **EP 2 144 767 B1**
(45) Veröffentlichungstag und Bekanntmachung des Hinweises auf die Patenterteilung: **15.05.2013**
(21) Anmeldenummer: 08708947.0
(22) Anmeldetag: 13.02.2008
(51) Int. Cl.: B60C 11/04, B60C 11/13

(54) **FAHRZEUGLUFTREIFEN**
VEHICLE TYRE
PNEUMATIQUE DE VÉHICULE À MOTEUR

(30) Priorität: 05.04.2007 DE 102007016930
(43) Veröffentlichungstag der Anmeldung: 20.01.2010
(73) Patentinhaber: Continental Reifen Deutschland GmbH, 30165 Hannover (DE)
(72) Erfinder: BUCHINGER-BARNSTORF, Thomas, 30974 Wennigsen (DE); RITTWEGER, Stefan, 30163 Hannover (DE); BÖHM, Robert, 30880 Laatzen (DE)
(74) Vertreter: Finger, Karsten
(86) Internationale Anmeldenummer: PCT/EP2008/051728
(87) Internationale Veröffentlichungsnummer: WO 2008/122456

(56) Entgegenhaltungen:
- EP-A- 0 503 534
- JP-A- 2001 030 718
- US-A- 4 114 671
- US-A1- 2007 151 645

## Beschreibung

Die Erfindung betrifft einen Fahrzeugluftreifen, insbesondere für Nutzfahrzeuge, mit einer Anzahl von in Umfangsrichtung umlaufenden Umfangsnuten, welche an der Laufstreifenperipherie parallel zueinander und geradlinig in Umfangsrichtung verlaufende Randkanten aufweisen, wobei durch an den Nutflanken befindliche Vorsprünge ein annähernd wellen- bzw. zickzackförmig verlaufender gegenüber der Breite der Umfangsnut an der Laufstreifenperipherie schmaler Nutgrundpfad gebildet ist, wobei die Vorsprünge Teile oder Abschnitte spitzer Körper sind, deren Basisfläche dem Nutgrund zugeordnet sind und deren Spitze der Laufstreifenperipherie benachbart sind.

Ein Fahrzeugluftreifen der Eingangs genannten Art ist aus der EP 0 503 534 A bekannt. Um in den Umfangsnuten das Einfangen von Steinen zu reduzieren, sind die Umfangsnuten derart ausgeführt, dass der Nutgrund nacheinander drei verschiedene Bereiche durchläuft, und zwar eine linken Extrembereich, eine Mittelbereich und einen rechten Extrembereich, umgekehrt wieder zurück und periodisch fortsetzend. Die Mittellinie der Umfangsnut ist in den Mittelbereichen mit einem steil zur Umfangsrichtung verlaufenden Versatz versehen, während sie in den Extrembereichen einen spitzen Winkel mit der Umfangsrichtung einschließt.

Bei dem aus der US 4,114,671 B bekannten Fahrzeugluftreifen steht es im Vordergrund, die Griffeigenschaften des Reifens zu optimieren, um einen gleichmäßigen Abrieb sowie trotz zunehmendem Abrieb gute Griffeigenschaften sicherzustellen. Der Nutgrundpfad der Umfangsnuten dieses bekannten Laufstreifens verläuft in einer ausgeprägten Zickzack-Form, deren doppelte Amplitude dem gegenseitigen Abstand der Randkanten der Umfangsnut an der Laufstreifeperipherie entspricht. Die dreieckigen Flächen reichen von der Laufstreifenperipherie nahezu bis zum Nutgrund und sind Flächen von prismatischen Erhebungen. In derart ausgeführten Umfangsnuten können sich Fremdkörper, insbesondere Steine, sehr leicht verklemmen.

Eine Vielzahl von Patentanmeldungen und Patente befasst sich damit, Umfangsnuten in Laufstreifen derart auszuführen, dass sich Fremdkörper, insbesondere kleine Steine, in den Nuten nicht verfangen können. So ist beispielsweise aus der US 3,055,410 bekannt, in zickzackförmigen Umfangsnuten an den einspringenden Ecken Vorsprünge, die bis an den Nutgrund reichen, vorzusehen. Die bekannten Lösungen konnten in der Praxis jedoch nicht überzeugen.

Gemäß der US 5,535,798 soll ein gleichförmiger Abrieb dadurch erreicht werden, dass in Umfangsnuten, welche geradlinig über den Reifenumfang verlaufen, unter einem spitzen Winkel zur radialen Richtung geneigt Nutflankenflächen vorgesehen sind, welche mit Vertiefungen versehen sind, die das Negativ dreiseitiger Pyramiden sind, deren Spitzen der Laufstreifenperipherie zugewandt sind.

Der Erfindung liegt die Aufgabe zu Grunde, bei einem Fahrzeugluftreifen der eingangs genannten Art den Laufstreifen bzw. dessen Umfangsnuten derart auszuführen, dass Fremdkörper, insbesondere kleine Steine, verlässlich abgestoßen werden. Gleichzeitig sollen die Profilhaltbarkeit und die Geräuschentwicklung des Profils beim Abrollen günstig beeinflusst werden.

Gelöst wird die gestellte Aufgabe erfindungsgemäß dadurch, dass die Vorsprünge Abschnitte von Kegeln oder von kegelähnlichen Körpern sind.

Die Vorsprünge sind daher derart ausgeführt und angeordnet, dass sie Flächen mit einem großen Öffnungswinkel zur Verfügung stellen können. Eindringenden Fremdkörpern, wie Steinen, stehen Abrollflächen zur Verfügung, die ein Hinausbefördern der Fremdkörper optimal unterstützen. Zwischen den an beiden Nutflanken vorgesehenen Vorsprüngen kann mit erfindungsgemäß ausgeführten Vorsprüngen ein Nutgrundpfad gebildet werden, welcher sich optimal verrunden lässt und auch geradlinig verlaufende Abschnitte aufweisen kann. Diese Maßnahme, gemeinsam mit der durch die speziell geformten Vorsprünge erzielten Versteifung der Profilrippen bei axial gerichteten Kräften, führen zu einer geringeren Verformung der Profilrippen und damit auch zu einer geringeren Rissanfälligkeit in den Umfangsnuten. Durch die speziell gestalteten Vorsprünge wird ferner der Querschnitt der Umfangsnuten über den Umfang ständig geändert, sodass kaum Rillenresonanzen entstehen können. Darüber hinaus erzeugt die Querschnittsreduzierung der Umfangsnuten durch die Vorsprünge, insbesondere auf losen Untergründen, einen Verzahnungseffekt in Traktionsrichtung. Bestimmte Körpertypen haben einen besonders deutlichen, steinabweisenden Effekt. Dabei ist es von besonderem Vorteil, dass die Vorsprünge Abschnitte von Kegeln oder von kegelähnlichen Körpern sind.

Bei Vorsprüngen mit gemäß der Erfindung gerundet ausgeführten Flächen kann es, um die Vorsprünge nicht zu voluminös werden zu lassen, von Vorteil sein, diese mittig mit einer gerundet ausgeführten Vertiefung zu versehen, die sich jeweils von der Basisfläche verjüngend in Richtung Spitze erstreckt.

Die Kanten der Vorsprünge an den Nutflanken schließen miteinander einen Winkel ein, welcher vorzugsweise 45° und 150° beträgt. Die Vorsprünge können daher an ihrer dem Nutgrund zugeordneten Basis eine relativ große Umfangserstreckung aufweisen.

Die Spitzen beziehungsweise Spitzenbereiche der Vorsprünge können bis zur Laufstreifenperipherie reichen, es ist jedoch von Vorteil, wenn die Spitzen der Vorsprünge sich von der Peripherie des Laufstreifens in einem Abstand befinden, welcher bis zu 30 % der Profiltiefe beträgt. Diese Maßnahme ist für die Stabilität des Profils und einen gleichmäßigen Abrieb günstig.

Erfindungsgemäß ausgeführte Umfangsnuten können, je nach Reifentyp, unterschiedlich breit ausgeführt sein, insbesondere kann ihre Breite, die dem gegenseitigen Abstand ihrer Randkanten entspricht, zwischen 8 mm und 20 mm betragen. Die Vorsprünge können eine relativ geringe oder auch eine relativ große Umfangserstreckung aufweisen. Diese Umfangserstreckung kann in einer Wellenlänge des wellen- oder zickzackförmigen Nutgrundpfades resultieren, welche zwischen 20 mm und 100 mm beträgt.

Weitere Merkmale, Vorteile und Einzelheiten werden nun anhand der Zeichnung, die schematisch mehrere Ausführungsbeispiele darstellt, näher beschrieben. Dabei zeigen
Fig. 1 eine Draufsicht auf einen Abschnitt einer Abwicklung einer ersten Ausführungsform eines Laufstreifens eines Fahrzeugluftreifens,
Fig. 2 eine Draufsicht auf ein Detail der Fig. 1 in vergrößerter Darstellung,
Fig. 3 ein Detail der Fig. 1 in Schrägansicht,
Fig. 4 einen Schnitt entlang der Linien A-A der Fig. 1,
Fig. 5 eine Draufsicht auf einen Abschnitt einer Abwicklung einer zweiten Ausführungsvariante eines Laufstreifenprofils,
Fig. 6 einen Schnitt entlang der Linie B-B der Fig. 5 und
Fig. 7 eine Ansicht eines Details dieses Laufstreifens.

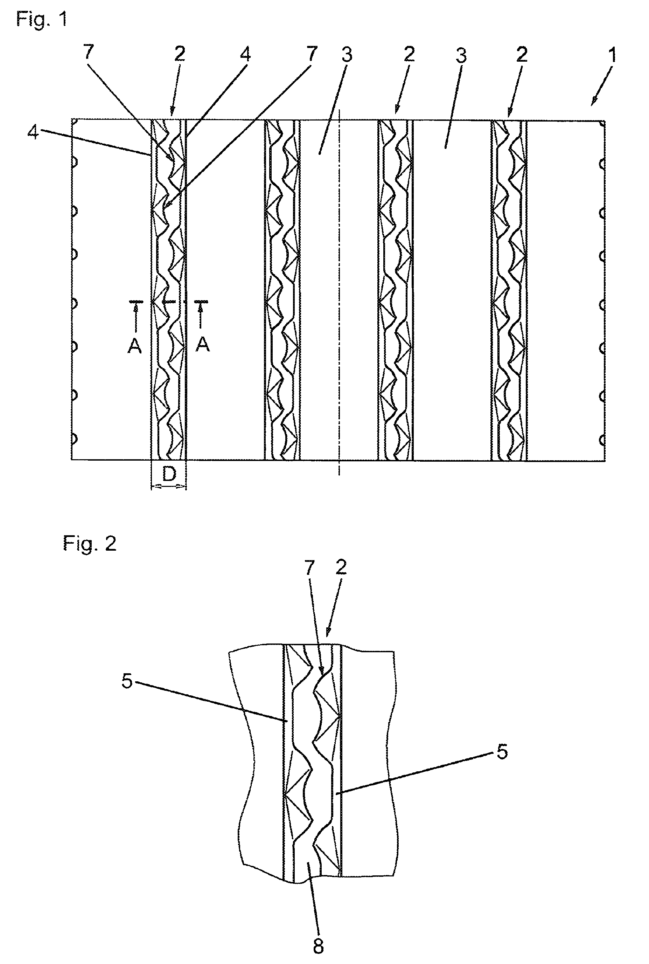

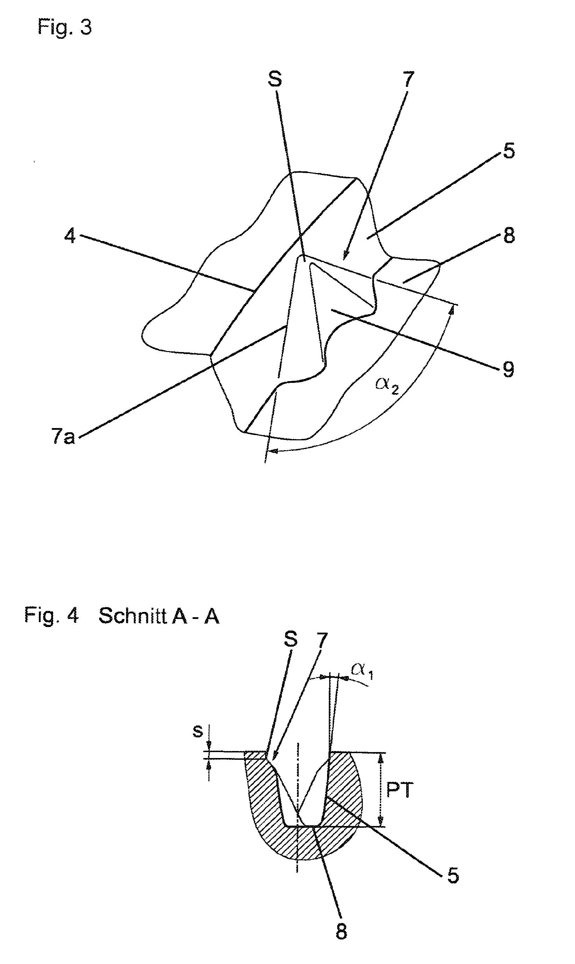

Die Erfindung befasst sich mit einer speziellen Ausgestaltung von Umfangsnuten in Laufstreifen von Nutzfahrzeugreifen. Fig. 1 zeigt eine Draufsicht auf einen Umfangsabschnitt eines Laufstreifens 1 mit vier voneinander gleich beabstandeten in Umfangsrichtung verlaufenden Umfangsnuten 2, welche, im Neuzustand des Reifens betrachtet, jeweils zwei an der Laufstreifenperipherie geradlinig und parallel zueinander verlaufende Randkanten 4 aufweisen. Die Umfangsnuten 2 trennen bzw. begrenzen Umfangsrippen 3, die zwar unstrukturiert dargestellt sind, jedoch mit schmalen Nuten, Einschnitten und dergleichen versehen sein können. Die Tiefe der Umfangsnuten 2 entspricht der Profiltiefe PT (siehe Fig. 4), welche zwischen 8 mm und 30 mm gewählt wird, ihre Breite D entspricht dem gegenseitigen Abstand der Randkanten 4 und wird zwischen 10 mm und 20 mm gewählt. Die Umfangsnuten 2 weisen zwei einander gegenüberliegende Nutflanken 5 auf, welche unter einem Winkel α₁ ein von bis zu 10° zur radialen Richtung geneigt verlaufen und nur jeweils abschnittsweise vorhanden sind, da an jeder Nutflanke 5 in regelmäßigen Abständen Vorsprünge 7 vorgesehen sind, wobei die Vorsprünge 7 an der einen Nutflanke 5 mit den Vorsprüngen 7 an der anderen Nutflanke 5 abwechseln, wodurch die Vorsprünge 7 an der einen Nutflanke 5 gegenüber jenen an der anderen Nutflanke 5 in Umfangsrichtung versetzt sind und zwischen den Vorsprüngen 7 am Nutgrund ein im Wesentlichen wellenförmig verlaufender und vergleichsweise schmaler Nutgrundpfad 8 verbleibt, der in Umfangsrichtung verlaufende Abschnitte aufeist, die abwechselnd entlang der einen und der anderen Nutflanke 5 verlaufen.

Die Ausführung der Vorsprünge 7 ist insbesondere aus Fig. 2, 3 und 4 ersichtlich. Jeder Vorsprung 7 ist in Anlehnung an einen bzw. ähnlich einem Abschnitt eines Kegels, entlang der Höhenerstreckung abgeschnitten, gestaltet, wobei die Basisfläche dem Nutgrund zugeordnet ist. Die Spitze bzw. der Spitzenbereich S jedes Vorsprunges 7 befindet sich in einem radialen Abstand s von der Randkante 4 von bis zu 30% der Profiltiefe PT. Die an der jeweiligen Nutflanke 5 anliegenden Begrenzungskanten 7a des Vorsprunges 7 verlaufen zueinander unter einem Öffnungswinkel α₂, welcher zwischen 45° und 150° gewählt wird. Eine am Vorsprung 7 mittig bzw. zentriert vorgesehene Vertiefung 9 erstreckt sich in radialer Richtung und nimmt den Vorsprung 7 an seiner Basis am Nutgrund bogenförmig aus, verjüngt sich in Richtung Vorsprungsspitze S und endet knapp vor dieser. Die Rundung an der Basis setzt sich bis zum oberen spitzen Ende der Vertiefung 9 fort. Durch die Ausnehmungen 9 in den Vorsprüngen 7 wird der im Wesentlichen wellenförmige Verlauf des Nutgrundpfades 8 bei einer relativ großvolumiger Ausführung der Vorsprünge sichergestellt.

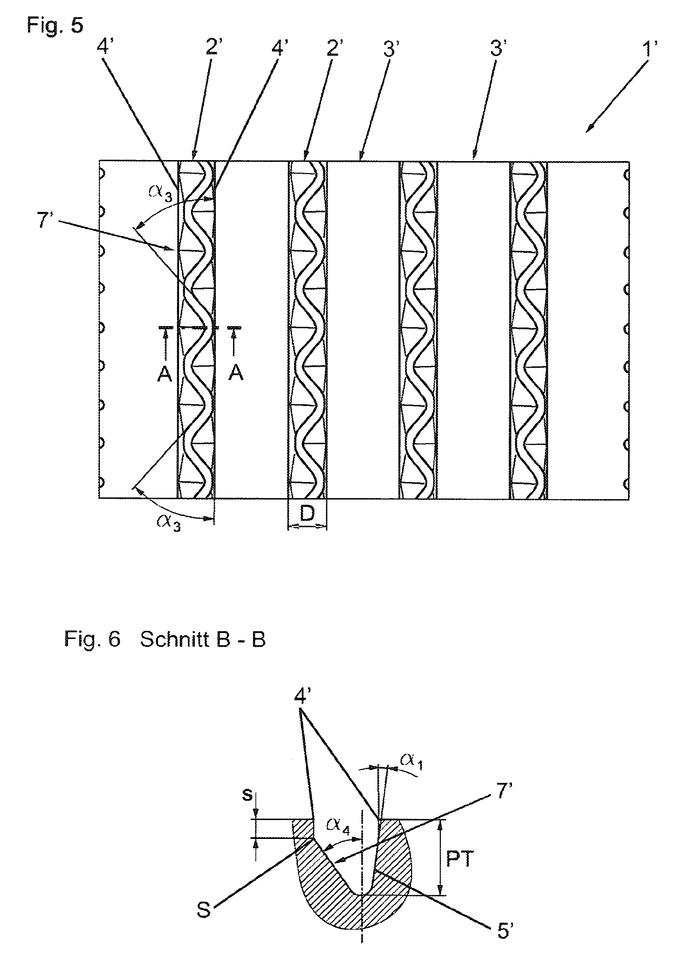

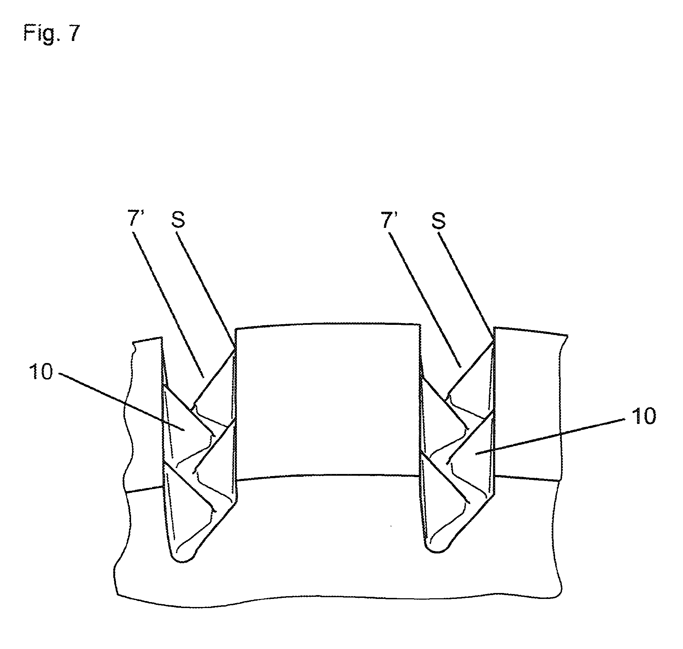

Bei der in Fig. 5 bis 7 gezeigten zweiten Ausführungsvariante sind, wie es insbesondere Fig. 5 zeigt, im Laufstreifen 1' ebenfalls vier in Umfangsrichtung umlaufende Umfangsnuten 2', die voneinander gleich beabstandet sind und Profilrippen 3' voneinander trennen, vorgesehen. Auch bei dieser Ausführungsvariante sind die Profilrippen 3' ohne besondere Strukturierung dargestellt. Die Umfangsnuten 2' weisen an der Laufstreifenperipherie jeweils parallel zueinander und geradlinig über den Umfang des Reifens verlaufende Randkanten 4' auf, deren gegenseitiger Abstand D, wie bei der Ausführungsform gemäß den Figuren 1 bis 4 zwischen 10 mm und 20 mm gewählt wird. Die Profiltiefe PT (Fig. 6) kann auch bei dieser Ausführungsvariante zwischen 8 mm und 30 mm gewählt werden. Die Nutflanken 5' jeder Umfangsnut sind auch bei dieser Ausführungsform nur noch abschnittsweise vorhanden und verlaufen zur radialen Richtung unter einem Winkel α₁ von bis zu 10°.

An jeder Nutflanke 5' sind jeweils übereinstimmend ausgeführte Vorsprünge 7' vorgesehen, die in Umfangsrichtung nur geringfügig voneinander beabstandet sind, wobei die Vorsprünge 7' an der einen Nutflanke 5' jeweils zwischen die Vorsprünge 7' an der anderen Nutflanke 5' hinein ragen. Jeder Vorsprung 7' ist in Anlehnung an oder ähnlich einem Abschnitt einer Pyramide geformt, deren Basisfläche dem Nutgrund 6' zugeordnet ist. Bevorzugt ist jeder Vorsprung 7' in der Form oder ähnlich der Form der diagonalen Hälfte einer vierseitigen, insbesondere regelmäßigen Pyramide ausgeführt. Die Spitze S des pyramidenähnlichen Vorsprunges 7' befindet sich an der Nutflanke 5', die dreieckigen Seitenflächen 10 enden an der Spitze S. Die Spitze S befindet sich von der Laufstreifenperipherie in einem Abstand s (Fig. 6), welcher bis zu 30 % der Profiltiefe PT beträgt. Der Winkel α₃, den die Basiskanten der Seitenflächen mit der Reifenumfangsrichtung einschließen, wird zwischen 30° und 80° gewählt, der Winkel α₄, den die gemeinsame Seitenkante der Seitenflächen 10 mit der radialen Richtung einschließt, wird zwischen 20° und 65° gewählt (Fig. 6).

Die Spitze der Ecke an der Basisfläche jedes Vorsprunges 7' ragt jeweils mittig zwischen die einander benachbarten Vorsprünge 7' an der anderen Nutflanke 5'. Die gegenseitige Anordnung ist dabei so getroffen, dass der zwischen den Vorsprüngen 7' der beiden Nutflanken 5' gebildete Nutgrundpfad 8' im Wesentlichen einer Wellenform folgt und eine Breite aufweist, die zwischen 20 % und 30 % der Breite D beträgt. Die Wellenlänge des Nutgrundpfades 8' beträgt zwischen 20 mm und 100 mm.

Durch die erfindungsgemäß gestalteten und angeordneten Vorsprünge 7, 7' werden an den Nutflanken 5, 5' Flächen mit relativ großen Öffnungswinkeln zur Verfügung gestellt, die Abrollflächen für Fremdkörper, wie kleine Steine, bilden und diese aus den Umfangsnuten 2 hinausbefördern. Der am Nutgrund gebildete etwa wellenförmig verlaufende Nutgrundpfad 8, 8' lässt sich durch die Ausbildung der Vorsprünge 7, 7' optimal verrunden, was für die Dauerhaltbarkeit des Profils von Vorteil ist. Die Vorsprünge 7, 7' selbst bilden eine Verstärkungsstruktur, die die Profilrippen 3' zwischen den Umfangsnuten 2' gegen axial gerichtete Kräfte abstützt, sodass durch die damit einhergehende größere Quersteifigkeit des Laufstreifens auch die Rissanfälligkeit am Nutgrund deutlich verringert wird. Der Querschnitt der Umfangsnut ändert sich ständig in Umfangsrichtung, sodass keine Rillenresonanzen entstehen können und das Abrollgeräusch somit vorteilhaft beeinflusst wird. Die Anordnung und Ausführung der Vorsprünge hat zudem eine Querschnittsverringerung der Umfangsnuten zur Folge, die eine Verzahnungswirkung in Traktionsrichtung zeigt, was insbesondere auf losen Untergründen von Vorteil ist.

### Bezugszeichenliste

| | |
|---|---|
| 1 | Laufstreifen |
| 1' | Laufstreifen |
| 2 | Umfangsnut |
| 2' | Umfangsnut |
| 3 | Rippe |
| 3' | Rippe |
| 4 | Randkante |
| 4' | Randkante |
| D | Nutbreite |
| PT | Profiltiefe |
| 5 | Nutflanke |
| 5' | Nutflanke |
| 6 | Nutgrund |
| 6' | Nutgrund |
| 7 | Vorsprung |
| 7a | Vorsprung |
| 7' | Vorsprung |
| 8 | Nutgrundpfad |
| 8' | Nutgrundpfad |
| 9 | Vertiefung |
| 10 | Seitenflächen |
| α₁ | Winkel der Nutflanken 5, 5' |
| α₂ | Öffnungswinkel von 7a |
| α₃ | Winkel Basiskanten (Vorsprung 7') |
| α₄ | Winkel Seitenkante (Vorsprung 7') |

## Patentansprüche

1. Fahrzeugluftreifen, insbesondere für Nutzfahrzeuge, mit einer Anzahl von in Umfangsrichtung umlaufenden Umfangsnuten (2), welche an der Laufstreifenperipherie parallel zueinander und geradlinig in Umfangsrichtung verlaufende Randkanten (4) aufweisen, wobei durch an den Nutflanken (5) befindliche Vorsprünge (7) ein annähernd wellen- bzw. zickzackförmig verlaufender, gegenüber der Breite (D) der Umfangsnut (2) an der Laufstreifenperipherie schmaler Nutgrundpfad (8) gebildet ist, wobei die Vorsprünge (7) Teile oder Abschnitte spitzer Körper sind, deren Basisflächen dem Nutgrund zugeordnet sind und deren Spitzen der Laufstreifenperipherie benachbart sind,
**dadurch gekennzeichnet,**
**dass** die Vorsprünge (7) Abschnitte von Kegeln oder von kegelähnlichen Körpern sind.

2. Fahrzeugluftreifen nach Anspruch 1, **dadurch gekennzeichnet, dass** die Vorsprünge (7) mittig mit einer gerundet ausgeführten Vertiefung (9) versehen sind, die sich jeweils von der Basisfläche verjüngend in Richtung Spitze (S) erstreckt.

3. Fahrzeugluftreifen nach Anspruch 1 oder 2, **dadurch gekennzeichnet, dass** die Kanten (7a) der Vorsprünge (7) an den Nutflanken (5) miteinander einen Winkel (α₂) einschließen, welcher zwischen 45° und 150° beträgt.

4. Fahrzeugluftreifen nach einem der Ansprüche 1 bis 3, **dadurch gekennzeichnet, dass** der Abstand der Spitzen (S) der Vorsprünge (7) von der Peripherie des Laufstreifens (1) bis zu 30 % der Profiltiefe (PT) beträgt.

5. Fahrzeugluftreifen nach einem der Ansprüche 1 bis 4, **dadurch gekennzeichnet, dass** der gegenseitige Abstand der Randkanten (4) der Umfangsnuten (2) zwischen 8 mm und 20 mm beträgt.

6. Fahrzeugluftreifen nach einem der Ansprüche 1 bis 5, **dadurch gekennzeichnet, dass** die Wellenlänge des wellen- oder zickzackförmigen Nutgrundpfades (8) zwischen 20 mm und 100 mm beträgt.

## Claims

1. Pneumatic vehicle tire, in particular for utility vehicles, having a number of circumferential grooves (2) which run around in the circumferential direction and which have, at the periphery of the tire tread, peripheral edges (4) which run parallel to one another and in a straight line in the circumferential direction, with a groove base path (8) which runs in an approximately undulating or zigzagged fashion and which is narrow in relation to the width (D) of the circumferential groove (2) at the periphery of the tire tread being formed by projections (7) located on the groove flanks (5), the projections (7) being parts or portions of pointed bodies whose base surfaces are assigned to the groove base and whose tips are adjacent the periphery of the tire tread,
**characterized**
**in that** the projections (7) are portions of cones or of cone-like bodies.

2. Pneumatic vehicle tire according to Claim 1, **characterized in that** the projections (7) are provided centrally with a rounded depression (9) which extends in each case in a tapering fashion from the base surface in the direction of the tip (S).

3. Pneumatic vehicle tire according to Claim 1 or 2, **characterized in that** the edges (7a) of the projections (7) on the groove flanks (5) enclose an angle (α₂) of between 45° and 150° with one another.

4. Pneumatic vehicle tire according to one of Claims 1 to 3, **characterized in that** the distance of the tips (S) of the projections (7) from the periphery of the tire tread (1) amounts to up to 30% of the profile depth (PT).

5. Pneumatic vehicle tire according to one of Claims 1 to 4, **characterized in that** the distance between the peripheral edges (4) of the circumferential grooves (2) amounts to between 8 mm and 20 mm.

6. Pneumatic vehicle tire according to one of Claims 1 to 5, **characterized in that** the wavelength of the undulating or zigzagged groove base path (8) amounts to between 20 mm and 100 mm.

## Revendications

1. Pneumatique de véhicule, en particulier pour des véhicules utilitaires, comprenant une pluralité de rainures périphériques (2) s'étendant dans la direction périphérique, lesquelles présentent sur la périphérie de la bande de roulement des arêtes de bord (4) s'étendant parallèlement les unes aux autres et en ligne droite dans la direction périphérique, un chemin de base de rainure (8) s'étendant approximativement sous forme ondulée ou en zigzag, plus étroit par rapport à la largeur (D) de la rainure périphérique (2) étant formé sur la périphérie de la bande de roulement, les saillies (7) étant des parties ou des portions de corps pointus, dont les faces de base sont associées à la base de rainure et dont les pointes sont adjacentes à la périphérie de la bande de roulement,
**caractérisé en ce que**
les saillies (7) sont des portions de sphères ou de corps similaires à des sphères.

2. Pneumatique de véhicule selon la revendication 1, **caractérisé en ce que** les saillies (7) sont pourvues centralement d'un renfoncement (9) réalisé sous forme arrondie, qui s'étend à chaque fois depuis la face de base en se rétrécissant dans la direction de la pointe (S).

3. Pneumatique de véhicule selon la revendication 1 ou 2, **caractérisé en ce que** les arêtes (7a) des saillies (7) forment l'une avec l'autre au niveau des flancs de rainures (5) un angle (α₂) qui est compris entre 45° et 150°.

4. Pneumatique de véhicule selon l'une quelconque des revendications 1 à 3, **caractérisé en ce que** la distance entre les pointes (S) des saillies (7) à la périphérie de la bande de roulement (1) vaut jusqu'à 30 % de la profondeur du profilé (PT).

5. Pneumatique de véhicule selon l'une quelconque des revendications 1 à 4, **caractérisé en ce que** la distance mutuelle entre les arêtes de bord (4) des rainures périphériques (2) vaut entre 8 mm et 20 mm.

6. Pneumatique de véhicule selon l'une quelconque des revendications 1 à 5, **caractérisé en ce que** la longueur d'onde du chemin de base de rainure de forme ondulée ou en zigzag (8) est comprise entre 20 mm et 100 mm.
